# FASCICULE DE BREVET EUROPEEN

(11) **EP 1 900 296 B1**
(45) Date de publication et mention de la délivrance du brevet: **08.09.2010**
(21) Numéro de dépôt: 06425624.1
(22) Date de dépôt: 11.09.2006
(51) Int. Cl.: A43B 23/26, A43B 5/04, B29D 35/14

(54) **Languette pour chaussures de sport et son procédé de fabrication**
Zunge für Sportschuh und Verfahren zu deren Herstellung
Tongue for a sports shoe and method for manufacturing same

(43) Date de publication de la demande: 19.03.2008
(73) Titulaire: LISA Lange International Sàrl, 1700 Fribourg (CH)
(72) Inventeur: Cagliari, Peter, 31044 Montebelluna (TV) (IT)
(74) Mandataire: Bugnion Genève

(56) Documents cités:
- EP-A1- 0 370 948
- CH-A5- 626 793
- DE-U- 1 680 320
- DE-U1- 8 103 473
- US-A- 2 242 353
- US-A1- 2005 210 707

## Description

L'invention concerne une languette pour chaussures de sport, particulièrement adaptée pour les chaussures utilisées dans les sports de glisse, tel que le ski, le surf, ou le patinage. Elle concerne aussi un procédé de fabrication d'une telle languette. Enfin, elle concerne aussi une chaussure de sport et/ou un chausson intérieur en tant que tel(s) comprenant une telle languette.

Selon l'art antérieur, une chaussure de ski se compose d'une tige rigide entourant un chausson de confort dans lequel le skieur glisse son pied. Un tel chausson comprend une languette dans sa partie antérieure, qui peut s'écarter sous la pression du pied à travers une échancrure de la tige de chaussure pour faciliter le chaussage et le déchaussage de la chaussure. Lors de la pratique du ski, le tibia du skieur vient en appui sur la languette du chausson lors des flexions pour guider l'engin de glisse. Pour limiter les points douloureux au niveau du tibia, la languette comprend au sein de sa structure une couche de mousse qui amortit les chocs exercés sur le tibia. Cette mousse est recouverte sur la face intérieure de la languette d'un tissu qui protège la mousse d'une usure rapide suite aux nombreux frottements contre la jambe du skieur et qui lui évite de plus des contacts directs avec la neige. Ce tissu permet en outre d'assurer une esthétique attrayante de la languette. Le document EP0370948 illustre une telle construction de l'art antérieur, dans laquelle des découpes ont de plus été prévues dans la surface extérieure de la languette afin de permettre la visualisation d'une telle mousse de confort et d'augmenter le caractère attrayant du chausson. Un inconvénient d'une telle languette de l'art antérieur est toutefois son manque de confort. En effet, les nombreux frottements du tissu de la languette sur le tibia d'un skieur lors de la pratique du ski induisent des points douloureux sur le tibia. De plus, les solutions de l'art antérieur ne permettent pas d'atteindre une esthétique satisfaisante.

Un chausson intérieur comprenant une languette avec un élément de confort venant en contact avec l'utilisateur est connu de CH 626 793 A5.

Ces mêmes problèmes et inconvénients se retrouvent dans de nombreux autres sports.

Il existe donc un besoin d'une nouvelle structure de languette de chaussure de sport qui ne présente pas les inconvénients des solutions de l'art antérieur.

Plus précisément, un premier objet de la présente invention consiste à proposer une languette de chaussure de sport qui améliore le confort de l'utilisateur.

Un second objet de la présente invention consiste à proposer une languette de chaussure de sport présentant une esthétique attrayante.

Un troisième objet de la présente invention consiste à proposer une languette de chaussure de sport dont le procédé de fabrication est intéressant sur le plan économique.

L'invention est définie par les revendications.

Ces objets, caractéristiques et avantages de la présente invention seront exposés en détail dans la description suivante d'un mode d'exécution particulier fait à titre non-limitatif en relation avec les figures jointes parmi lesquelles.
La figure 1 est une vue en perspective arrière d'une languette de chaussure de sport selon un mode d'implémentation de l'invention ;
La figure 2 est une vue en perspective arrière d'un chausson de chaussure de ski intégrant la languette de la figure 1.

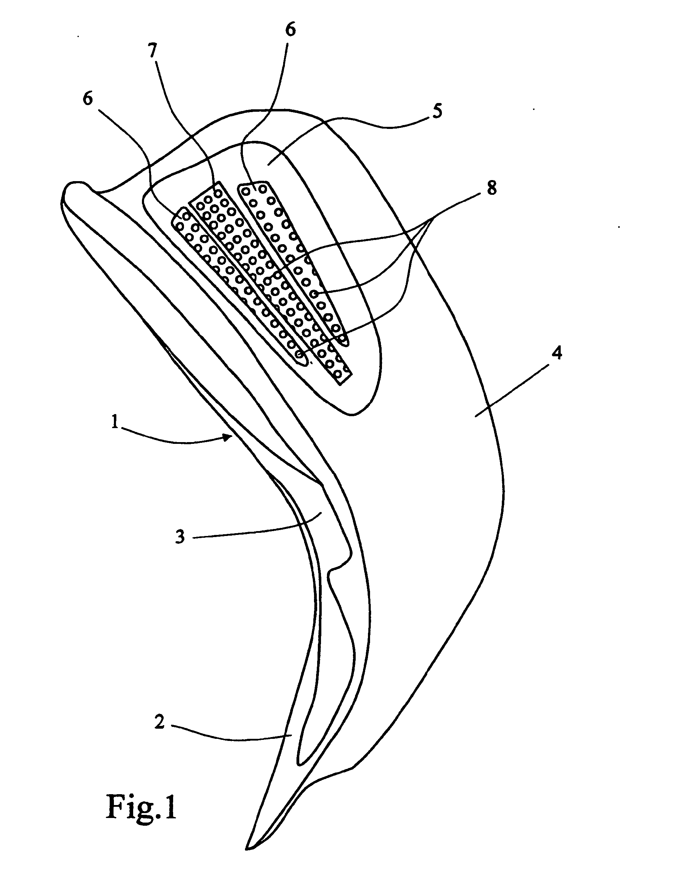

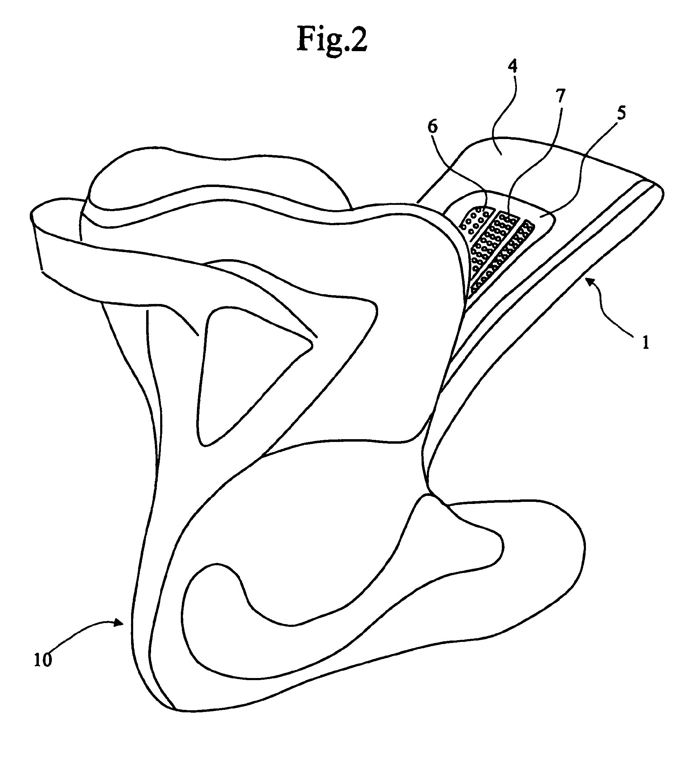

Sur les figures 1 et 2, le concept de l'invention est illustré dans le cadre d'une languette 1 destinée à un chausson 10 pour chaussure de ski. Toutefois, ce concept pourrait être implémenté sur toute autre chaussure de sport, notamment les chaussures montantes venant en contact avec le tibia de l'utilisateur. Par exemple, ce concept pourrait être mis en oeuvre sur des chaussures de surf, de randonnée, de patinage...

Selon le mode d'exécution de l'invention représenté sur la figure 1, la languette de chaussure de sport 1 présente une première face 2 intégrant de manière optionnelle des renforts 3, et une seconde face 4 destinée à venir en appui directement sur le pied et le tibia d'un utilisateur, expression considérée au sens large dans tout le texte et incluant un appui sur une chaussette ou un vêtement de l'utilisateur. Selon l'invention, un élément de confort 5 est disposé directement sur le tissu recouvrant cette seconde face 4, dans sa partie supérieure, à l'extérieur de la languette. Cet élément de confort 5 remplit les deux fonctions principales d'amortissement des chocs et de limitation des frottements avec le tibia d'un utilisateur.

Pour remplir ces deux fonctions techniques, l'élément de confort 5 est réalisé dans un matériau souple et collant. Dans le mode d'implémentation représenté, il présente deux parties protubérantes latérales 6 s'étendant sensiblement verticalement de manière à pouvoir entourer le tibia d'un utilisateur et former un logement pour ce tibia qui vient en léger appui seulement sur un élément protubérant central 7. Les deux parties latérales 6 limitent le rapprochement du tibia sur l'élément de confort 5 et limitent ainsi les points douloureux du fait du contact du tibia sur la languette 1. De plus, l'élément de confort est dans un matériau collant pour adhérer au bas de jambe d'un utilisateur, ou plus précisément à sa chaussette, pour réduire ainsi grandement les glissements de la jambe de l'utilisateur par rapport à la languette et supprimer les points douloureux du fait des frottements résultants. Pour cela, l'élément de confort 5 se déforme sous l'effort de cisaillement, exercé entre la surface 4 de la languette d'une part et la jambe de l'utilisateur d'autre part. Le matériau utilisé possède donc une forte caractéristique d'élongation avant rupture. Enfin, selon la variante de réalisation proposée, les différents éléments protubérants 6, 7, présentent des trous 8 qui augmentent leur propriété d'amortissement et leur propriété de déformation et donc leur effet collant.

Pour atteindre les effets techniques recherchés, il faut donc un matériau souple, présentant une épaisseur suffisante, entre 3 et 10 millimètres, pour remplir la fonction d'amortissement des chocs. Un tel matériau possède alors aussi en général une propriété collante nettement supérieure à celle des tissus généralement utilisés. On choisira avantageusement un matériau résistant présentant la meilleure combinaison possible entre les propriétés d'amortissement et de collage.

Par exemple, un polyuréthane ou un silicone sous forme de gel de faible dureté. En général, une dureté inférieure à 15 shA conviendrait bien. De même, un caoutchouc de faible dureté pourrait convenir. Comme autre exemple, un matériau de type élastomère thermoplastique à base de SEBS, comme le produit commercialisé sous le nom Linea Verde LV.PRENE 391, peut être utilisé. L'invention ne se limite pas aux exemples précédents mais tout matériau remplissant les propriétés décrites précédemment pourrait convenir.

L'élément de confort 5 a une dimension optimisée pour remplir ses fonctions de confort au niveau du tibia du skieur tout en ne gênant pas le chaussage et le déchaussage de la chaussure. Pour cela, il s'étend au maximum sur la moitié supérieure haute de la languette. Ainsi, lors d'une phase de chaussage et de déchaussage, le pied du skieur glisse sur le tissu de la languette au niveau de sa partie inférieure et l'élément de confort ajouté n'a pas d'incidence négative.

L'invention porte aussi sur le procédé de fabrication d'une telle languette de chaussure de sport selon la revendication 11, comprenant l'étape suivante :
- injection ou coulée d'un matériau mono ou bi-composant tel que du polyuréthane ou un gel silicone dans un moule pour former un élément de confort 5 directement sur la face extérieure 4 de la languette destinée à venir en contact avec le pied ou le bas de jambe de l'utilisateur.

Pour mettre en oeuvre avantageusement un tel procédé avec une injection, on utilise un matériau dont l'injection se fait à basse température pour éviter d'endommager le tissu.

Finalement, la solution atteint bien les objets recherchés et présente les avantages suivants :
- la languette présente une propriété d'amortissement des chocs, directement en contact avec le tibia de l'utilisateur, ce qui améliore de manière optimale son effet d'amortissement ;
- la languette présente de plus une propriété de réduction, de quasi-suppression, des glissements du tibia sur la languette, ce qui améliore grandement son confort ;
- la languette présente un élément de confort visible, qui créée une impression visuelle de confort, et dont le design peut être variable tout en atteignant les effets techniques recherchés, afin de créer un effet esthétique attrayant et une mise en valeur de la fonction technique.

Dans les modes d'exécution précédents, l'invention a été implémentée sur une languette de chausson de chaussure de ski. Elle pourrait toutefois aussi être implémentée sur d'autres chaussures de sport, même éventuellement sur des chaussures basses pour lesquelles la languette provoque des points douloureux au niveau de son frottement avec le cou de pied d'un utilisateur. Les dimensions de l'élément de confort seront adaptées à l'utilisation souhaitée.

## Revendications

1. Languette de chaussure de sport, **caractérisée en ce qu'**elle comprend un élément de confort (5) positionné directement sur le tissu recouvrant sa surface (4) destinée à être orientée vers l'intérieur de la chaussure de sport pour venir en contact avec le pied ou la jambe d'un utilisateur, à l'extérieur de la languette, cet élément de confort (5) étant dans un matériau souple et collant remplissant une première fonction technique d'amortissement des chocs et une seconde fonction technique de réduction des frottements et glissements par cisaillement.

2. Languette de chaussure de sport selon la revendication 1, **caractérisée en ce qu'**elle présente une longueur apte à venir en contact avec le tibia d'un utilisateur et **en ce que** l'élément de confort s'étend au maximum sur la moitié supérieure de la languette.

3. Languette de chaussure de sport selon la revendication 1, **caractérisée en ce qu'**elle présente une longueur apte à venir en contact avec le cou de pied d'un utilisateur et **en ce que** l'élément de confort s'étend au maximum sur la moitié supérieure de la languette.

4. Languette de chaussure de sport selon une des revendications précédentes, **caractérisée en ce que** l'élément de confort (5) présente deux parties latérales protubérantes (6).

5. Languette de chaussure de sport selon la revendication précédente, **caractérisée en ce que** l'élément de confort (5) présente une partie protubérante centrale (7).

6. Languette de chaussure de sport selon la revendication 4 ou 5, **caractérisée en ce qu'**au moins une partie des parties protubérantes (6, 7) présente des trous (8).

7. Languette de chaussure de sport selon une des revendications précédentes, **caractérisée en ce que** l'élément de confort (5) est dans un polyuréthane ou un silicone de dureté inférieure à 15 shA.

8. Languette de chaussure de sport selon une des revendications précédentes, **caractérisée en ce que** l'élément de confort (5) est dans un matériau élastomère thermoplastique à base de SEBS

9. Chausson de chaussure de sport comprenant une languette selon une des revendications 1 à 8.

10. Chaussure de sport comprenant une languette selon une des revendications 1 à 8.

11. Procédé de fabrication d'une languette de chaussure de sport selon l'une des revendications 1 à 8, **caractérisé en ce qu'**il comprend une étape d'injection ou de coulée d'un matériau souple et collant dans un moule pour former un élément de confort (5) directement sur le tissu recouvrant la surface (4) de la languette destinée à être orientée vers l'intérieur de la chaussure de sport pour venir en contact avec le pied ou la jambe d'un utilisateur, le matériau souple et collant remplissant une première fonction technique d'amortissement des chocs et une seconde fonction technique de réduction des frottements et glissements par cisaillement, l'élément de confort étant positionné à l'extérieur de la languette.

## Claims

1. A sports boot tongue, **characterized in that** it comprises a comfort element (5) positioned directly on the fabric covering its surface (4) designed to be oriented toward the inside of the sports boot in order to come into contact with the foot or the leg of a user, in the outer surface of the tongue, this comfort element (5) being made from a flexible and adhesive material fulfilling a first technical function of absorbing shocks and a second technical function of reducing friction and sliding by shearing.

2. The sports boot tongue as claimed in claim 1, **characterized in that** it has a length capable of coming into contact with the tibia of a user and wherein the comfort element extends at most over the upper half of the tongue.

3. The sports boot tongue as claimed in claim 1, **characterized in that** it has a length capable of coming into contact with the instep of a user and wherein the comfort element extends at most over the upper half of the tongue.

4. The sports boot tongue as claimed in one of the preceding claims, **characterized in that** the comfort element (5) has two protuberant lateral parts (6).

5. The sports boot tongue as claimed in the preceding claim, **characterized in that** the comfort element (5) has a central protuberant part (7).

6. The sports boot tongue as claimed in claim 4 or 5, **characterized in that** at least a part of the protuberant parts (6, 7) has holes (8).

7. The sports boot tongue as claimed in one of the preceding claims, **characterized in that** the comfort element (5) is made from a polyurethane or a silicone with a hardness of less than 15 Shore A.

8. The sports boot tongue as claimed in one of the preceding claims, **characterized in that** the comfort element (5) is made from an SEBS-based thermoplastic elastomer.

9. A sports boot liner comprising a tongue as claimed in one of claims 1 to 8.

10. A sports boot comprising a tongue as claimed in one of claims 1 to 8.

11. A method for manufacturing a sports boot tongue as claimed in one of claims 1 to 8, **characterized in that** it comprises a stage of injecting or pouring a flexible, adhesive material into a mold in order to form the comfort element (5) directly on the fabric covering the surface (4) of the tongue designed to be oriented toward the inside of the sports boot in order to come into contact with the foot or the leg of a user the flexible and adhesive material fulfilling a first technical function of absorbing shocks and a second technical function of reducing friction and sliding by shearing, the comfort element being positioned in the outer surface of the tongue.

## Patentansprüche

1. Zunge für Sportschuh, **dadurch gekennzeichnet, dass** sie ein Komfortelement (5) enthält, welches unmittelbar auf dem Stoff angebracht ist, der die Oberfläche (4) der Zunge bedeckt und dazu bestimmt ist, gegen das Innere des Sportschuhs gerichtet zu sein, um in Berührung mit dem Fuss oder dem Bein eines Benutzers zu kommen, wobei sich das Komfortelement (5) aussen an der Zunge befindet und aus einem weichen und haftenden Material besteht, das als erste technische Funktion als Stossdämpfer wirkt und als zweite technische Funktion zur Verminderung von Reibungen und Abgleiten unter Scherbeanspruchung dient.

2. Zunge für Sportschuh nach Anspruch 1, **dadurch gekennzeichnet, dass** sie eine Länge aufweist, die dazu geeignet ist, sich an das Schienbein eines Benutzers anzulegen, und dass sich das Komfortelement höchstens über die obere Hälfte der Zunge erstreckt.

3. Zunge für Sportschuh nach Anspruch 1, **dadurch gekennzeichnet, dass** sie eine Länge aufweist, die dazu in der Lage ist, in Berührung mit dem Spann am Fuss eines Benutzers zu kommen, und dass sich das Komfortelement höchstens über die obere Hälfte der Zunge erstreckt.

4. Zunge für Sportschuh nach einem der vorstehenden Ansprüche, **dadurch gekennzeichnet, dass** das Komfortelement (5) zwei seitliche, vorstehende Bereiche (6) aufweist.

5. Zunge für Sportschuh nach vorstehendem Anspruch, **dadurch gekennzeichnet, dass** das Komfortelement (5) einen mittigen, vorstehenden Bereich (7) aufweist.

6. Zunge für Sportschuh nach Anspruch 4 oder 5, **dadurch gekennzeichnet, dass** mindestens einer der vorstehenden Bereiche (6, 7) mit Löchern (8) versehen ist.

7. Zunge für Sportschuh nach einem der vorstehenden Ansprüche, **dadurch gekennzeichnet, dass** das Komfortelement (5) aus einem Polyurethan oder einem Silikon mit einer Härte von weniger als 15 ShA besteht.

8. Zunge für Sportschuh nach einem der vorstehenden Ansprüche, **dadurch gekennzeichnet, dass** das Komfortelement (5) aus einem thermoplastischen elastomeren Material auf der Grundlage von SEBS besteht.

9. Füssling für Sportschuh, welcher eine Zunge nach einem der Ansprüche 1 bis 8 aufweist.

10. Sportschuh, welcher eine Zunge nach einem der Ansprüche 1 bis 8 aufweist.

11. Verfahren zur Herstellung einer Zunge für Sportschuh nach einem der Ansprüche 1 bis 8, **dadurch gekennzeichnet, dass** das Verfahren einen Schritt aufweist, bei dem ein weiches und haftfähiges Material in eine Form eingespritzt oder eingegossen wird, um ein Komfortelement (5) unmittelbar auf dem Stoff auszubilden, welcher die Oberfläche (4) der Zunge überdeckt, die zur Orientierung gegen das Innere des Sportschuhs vorgesehen ist, um in Berührung mit dem Fuss oder dem Bein eines Benutzers zu kommen, wobei das weiche und haftende Material als erste technische Funktion die Dämpfung von Stössen und als zweite technische Funktion die Verminderung der Reibungen und des Gleitens unter Scherbeanspruchung bewirkt, und wobei das Komfortelement aussen an der Zunge angeordnet ist.
